# EUROPÄISCHE PATENTANMELDUNG

(11) **EP 3 653 469 A1**
(43) Veröffentlichungstag der Anmeldung: **20.05.2020**
(21) Anmeldenummer: 19000510.8
(22) Anmeldetag: 07.11.2019
(51) Int. Cl.: B62D 11/04, B62D 7/02, B62D 7/04, B60B 33/00, B60K 7/00, B60K 17/30

(54) **LENKVORRICHTUNG EINES FAHRZEUGS**

(30) Priorität: 14.11.2018 DE 202018005272 U
(71) Anmelder: isel GmbH & Co. KG, 13627 Berlin-Charlottenburg (DE)
(72) Erfinder: Isert, Hugo, D-13627 Berlin-Charlottenburg (DE)
(74) Vertreter: Weihrauch, Frank

(57) **Zusammenfassung**

Die Erfindung betrifft eine Lenkvorrichtung, aufweisend ein Drehgestell (1), ein erstes (2) und ein zweites Laufrad (3) sowie eine Antriebseinheit (4), wobei das Drehgestell (1) gegenüber einem Fahrgestell (5) um eine Vertikalachse (11) in einem Drehgestelllager drehbar gelagert ist, wobei das erste (2) und das zweite Laufrad (3) mittels einer Radaufnahme (6) rotierbar um eine gemeinsame Horizontalachse (7) an dem Drehgestell aufgenommen sind, wobei die Antriebseinheit (4) einen ersten Radantrieb (8), einen zweiten Radantrieb (9) und eine Steuereinheit (10) aufweist, wobei der erste Radantrieb (8) dem ersten Laufrad (2) zugeordnet ist, wobei der zweite Radantrieb (9) dem zweiten Laufrad (3) zugeordnet ist, und wobei jeder der beiden Radantriebe (8, 9) ausgebildet ist, das jeweils zugeordnete Laufrad (2, 3) separat mit einem Drehmoment (12) zu beaufschlagen, wobei die Steuerungseinheit (10) mit den Radantrieben (8, 9) verbunden ist, wobei die Steuerungseinheit (10) ausgebildet ist, Steuersignale an die Radantriebe (8, 9) zu übertragen, und wobei das Drehgestell (1) ausgebildet ist, sich mittels einer unterschiedlichen Drehgeschwindigkeit der Laufräder (2, 3) gegenüber dem Fahrgestell (5) um die Vertikalachse (11) zu verdrehen.

## Beschreibung

Die Erfindung betrifft eine Lenkvorrichtung eines Fahrzeugs. Insbesondere betrifft die Erfindung eine Zwillingsradlenkvorrichtung für ein allradgetriebenes Elektrofahrzeug.

Aus dem Stand der Technik sind verschiedene Möglichkeiten für Lenkvorrichtungen für Fahrzeuge bekannt. Bei einer Schwenkachslenkung, welche insbesondere als Drehschemellenkung bekannt ist, wird eine gesamte Achse einschließlich der beiden an deren Enden angeordneten Rädern um eine Drehachse geschwenkt. Bei der Achsschenkellenkung wird jedes Rad an einem Achsstummel geführt und um eine separate Drehachse geschwenkt. Die Verdrehung um die Drehachse wird mittels einer Lenkkraft bewirkt, die in der Regel durch ein Lenkgetriebe bereitgestellt wird.

Aufgabe der Erfindung ist es, eine Lenkvorrichtung für ein Fahrzeug aufzuzeigen, welche eine gute Lenkbarkeit auf kleinem Raum aufweist, ein schnelles Lenken ermöglicht, einen geringen Bauraum beansprucht und kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Erfindungsgemäß weist die Lenkvorrichtung ein Drehgestell, ein erstes und ein zweites Laufrad sowie eine Antriebseinheit auf.

Das Drehgestell ist erfindungsgemäß gegenüber einem Fahrgestell um eine Vertikalachse drehbar gelagert. Das Drehgestell kann vorzugsweise als Drehschemel ausgebildet sein; es ist jedoch auch in anderen Bauformen ausbildbar. Das Drehgestell ist in einem Drehgestelllager drehbar gelagert. In einer besonders einfachen Bauform des Drehgestelllagers ist ein zylindrischer Bolzen des Drehgestells in eine hohlzylindrische Öffnung des Fahrgestells eingeschoben oder umgekehrt. Dies ermöglicht eine Rotation des Drehgestells um die Vertikalachse. Das Drehgestell ist passiv verdrehbar gelagert.

Das Drehgestell ist vorzugsweise mittels eines Federelements stoßgedämpft ausgebildet.

Das erste und das zweite Laufrad sind mittels einer Radaufnahme rotierbar um eine gemeinsame Horizontalachse an dem Drehgestell aufgenommen. Die Radaufnahme ist so gestaltet, dass die beiden Laufräder vorzugsweise in räumlicher Nähe und mit paralleler Laufrichtung angeordnet sind. Hierzu können die Radaufnahmen auch baulich verbunden sein. So können die Radaufnahmen einen gemeinsamen Achskörper oder zwei Teilachsen aufweisen. Die Radaufnahmen sind so ausgestaltet, dass sie eine Rotationsbewegung der Laufräder um die gemeinsame Horizontalachse ermöglichen. Die einfachste Bauform des Drehgestells besteht in einer Radgabel, welche die Radaufnahmen der beiden Laufräder aufnimmt. Die konstruktive Ausbildung kann auch in anderen Bauformen von Achsen und Radaufnahmen erfolgen, welche die beschriebenen Merkmale aufweisen.

Die beiden Laufräder sind in der Radaufnahme voneinander unabhängig drehbar gelagert.

Die Antriebseinheit weist erfindungsgemäß einen ersten Radantrieb, einen zweiten Radantrieb und eine Steuereinheit auf.

Der erste Radantrieb ist dabei dem ersten Laufrad und der zweite Radantrieb dem zweiten Laufrad zugeordnet, die Radantriebe sind vorzugweise elektromotorisch realisiert. So ist in einer Ausbildung jeder Radantrieb beispielsweise durch einen Nabenmotor realisiert. Vorteilhaft ist hierbei insbesondere der geringe Platzbedarf sowie eine effiziente Kraftübertragung durch Direktantrieb.
In einer anderen Bauform sind Radantrieb und Laufrad von einander beabstandet angeordnet. Die Kraftübertragung erfolgt dann Ober ein Getriebe. Diese Bauform ermöglicht es beispielsweise, für beide Radantriebe einen gemeinsamen Motor einzusetzen und die Zuordnung der Drehmomentübertragung an die beiden Laufräder mittels geeigneter Getriebe vorzunehmen.

Erfindungsgemäß ist jeder der beiden Radantriebe dazu ausgebildet, das jeweils zugeordnete Laufrad separat mit einem Drehmoment zu beaufschlagen. Mittels der separten Drehmomentbeaufschlagung wird die Drehgeschwindigkeit jedes La ufrades einzeln festgelegt. Somit kann eine Vielzahl unterschiedlicher Betriebszustände in Bezug auf das Verhältnis der Drehbewegungen der beiden Laufräder zueinander eingestellt werden. Die Drehmomentbeaufschlagung kann dabei sowohl als Antrieb als auch als Abbremsung erfolgen.

Die wichtigsten möglichen Betriebszustände bestehen darin, beide Laufräder mit gleicher Geschwindigkeit drehen zu lassen, das erste Laufrad schneller als das zweite Laufrad zu drehen und umgekehrt, nur ein Laufrad zu drehen und das andere zu blockieren oder beide Laufräder in entgegengesetzten Richtungen zu drehen.

Im Fahrbetrieb ist es also unter anderem möglich, ein Laufrad stärker als das andere zu beschleunigen, ein Laufrad zu verzögern oder beide Laufräder unterschiedlich stark zu verzögern, das Beschleunigen nur eines Laufrades durchzuführen oder auch die Drehrichtung eines Laufrades oder beider Laufräder umzukehren.

Die Steuerungseinheit ist erfindungsgemäß mit beiden Radantrieben so verbunden, dass ein Steuersignal übertragbar ist. Sie ist dazu ausgebildet die Fahrbefehle vom Fahrer, dem Fahrzeug selbst oder einer anderen Quelle durch eine Anpassung des Steuersignals umzusetzen. Die Steuerungseinheit ist dazu ausgebildet ein Steuersignal an die Radantriebe zu übertragen. Das Steuersignal ist getrennt zu jeweils einem Radantrieb oder zu beiden Antrieben zusammen übertragbar. Das Steuersignal bremst oder beschleunigt jeden der Radantriebe einzeln und bewirkt so in der Folge eine Lenkbewegung oder gerade Fahrbewegung des Drehgestells und damit des Fahrzeugs. Die Steuerungseinheit kann baulich mit dem Drehgestell verbunden, aber auch an anderer Stelle, beispielsweise an einem Fahrgestell, angeordnet sein

Erfindungsgemäß ist das Drehgestell ausgebildet, sich mittels einer unterschiedlichen Drehgeschwindigkeit der Laufräder gegenüber dem Fahrgestell um die Vertikalachse zu verdrehen. Durch die parallele Anordnung der Laufräder wird durch eine unterschiedliche Drehgeschwindigkeit ein Drehmoment um die Rotationsachse der Laufräder hervorgerufen. Das Drehmoment wird von den Laufrädern auf das Drehgestell übertragen und bewirkt ein Drehmoment um die Vertikalachse und ruft eine Rotation des Drehgestells um die Vertikalachse hervor. Das Drehmoment, welches das Drehgestell verdreht, wird also zwischen dem Drehgestell und der Fahrbahn, und nicht zwischen dem Drehgestell und dem Fahrgestell erzeugt. Für eine optimale Übertragung des Drehmomentes ist die Vertikalachse vorzugsweise mittig zwischen den beiden Laufrädern angeordnet. So sind Lenkvorgänge auf kleinstem Raum möglich. So ist auch eine Lenkbewegung durch gegenlaufende Laufräder möglich.

Es sind auch andere Positionen der Laufräder zur Vertikalachse möglich, welche jeweils eigene Vorteile besitzen. Verläuft die Vertikalachse beispielsweise nicht direkt durch die Horizontalachse der Laufräder ergeben sich für das Drehgestell stabilisierende Konstruktionsmöglichkeiten. So kann die Verbindung zwischen den Radaufnahmen der Laufräder und dem Ansetzpunkt an der Vertikalachse beispielsweise als gefederter Hebelarm ausgebildet sein. Es ist dadurch bei geeigneter Anordnung der Federelemente eine bessere Verteilung von Stoßbelastungen möglich. Auch Stöße aus der Fahrtrichtung bei Fahrbahnunebenheiten treffen so nicht direkt rechtwinklig auf die Laufräder und Vertikalachse, womit vorteilhaft der Fahrkomfort erhöht und die dynamische Belastung der gesamten Vorrichtung reduziert wird.

Die erfindungsgemäße Lenkvorrichtung ermöglicht bei bestimmungsgemäßem Betrieb die nachfolgend beschriebenen Lenk- und Fahrbewegungen.

Bei gleichen Drehgeschwindigkeiten der Laufräder führen die Laufräder eine Geradeausfahrt durch. Das Drehgestell wird somit um seine Vertikalachse nicht verdreht.

Durch eine unterschiedliche Drehgeschwindigkeit der Laufräder wird dagegen eine Verdrehung des Drehgestells um die Vertikalachse hervorgerufen. Dabei verdreht sich bei einer Vorwärtsfahrt das Drehgestell in Richtung des langsamer drehenden Laufrades. Die Horizontalachse der Laufräder ändert damit ihre Lage und die Laufräder führen eine Kurvenfahrt aus. Da das Drehgestell an dem Fahrgestell angelenkt ist, führt damit das gesamte Fahrzeug eine Kurvenfahrt aus. Die Verdrehung des Drehgestells wird zur Lenkung des Fahrzeuges genutzt. Wird nun wieder eine gleiche Drehgeschwindigkeit der Laufräder eingestellt, wird die Verdrehung des Drehgestells beendet und damit die Kurvenfahrt beendet. Die Laufräder führen wieder eine Geradeausfahrt aus, wobei die Richtung der nun vorliegenden Geradeausfahrt von der der ursprünglichen Geradeausfahrt infolge der zwischenzeitlichen Kurvenfahrt abweicht.

Ein Umkehren der Drehrichtung eines Laufrades gegenüber der Drehrichtung des anderen Laufrades ermöglicht eine Drehung des Drehgestells auf kleinstem Raum, vorzugsweise ohne eine Veränderung der Position der Vertikalachse. Das Drehgestell vollzieht dann eine Verdrehung auf der Stelle.

Dies ist insbesondere bei einer Wende oder bei Einparkmanövern sehr vorteilhaft.

Als besonderer Vorteil wurde somit überraschend eine Lösung gefunden, bei der eine Lenkbewegung ohne zusätzliche Mittel zur Bereitstellung einer Lenkkraft ermöglicht wird. Vielmehr wird die Änderung der Position der Lenkvorrichtung allein mit den Antrieben der Laufräder bewirkt.

Ein weiterer Vorteil besteht darin, dass eine Lenkung im Stand ausgeführt werden kann. Ferner ist es als Vorteil möglich, die Lenkbewegung, insbesondere auch im Stand, besonders schnell zu vollziehen. Weiterhin ist es vorteilhaft, dass das Drehgestell einen Vollkreisverdrehung durchführen und jede beliebige Winkelstellung gegenüber dem Fahrgestell einnehmen kann. Damit geht einher, dass die Verdrehung in beiden Richtungen auch für einen beliebigen Winkel von über 360 Grad fortgesetzt werden kann und somit insbesondere bei Einparkmanövern für einen Wechsel zwischen einer Lenkrichtung von links nach rechts oder umgekehrt keine vorherige Rückstellung in eine vorbestimmte Neutralstellung erforderlich ist. Zudem ist es bei entsprechender Ausbildung der Radantriebe auch möglich, beispielsweise eine Vorwärtsfahrt auch dann auszuführen, wenn das Drehgestell um 180 Grad verdreht positioniert ist, indem die Laufräder in umgekehrter Drehrichtung betrieben werden.

In einer vorteilhaften Weiterbildung ist es möglich mit der erfindungsgemäßen Lenkvorrichtung in einfacher Weise ein Fahrzeug auszubilden, welches einen Allradantrieb aufweist. Hierzu werden auch die in der Regel zwei weiteren Laufräder, welche an dem Fahrgestell angeordnet sind, aktiv angetrieben. Vorzugsweise erfolgt dies durch einen elektromotorischen Antrieb. Hierbei erfolgt vorzugsweise die Ansteuerung auch der weiteren elektromotorisch angetriebenen Laufräder über die Steuerungseinheit. Hierbei ist die Steuerungseinheit so ausgebildet, dass für alle Laufräder, also für die Laufräder am Drehgestell als auch für die weiteren Laufräder am Fahrgestell die sich aus der jeweiligen Lenkgeometrie ergebende zutreffende Drehzahl festgelegt wird.

Gemäß einer vorteilhaften Weiterbildung ist die Antriebseinheit elektromotorisch ausgebildet. Der Vorteil in der Verwendung von Elektromotoren liegt in ihrer guten Steuerbarkeit und in einem hohen Wirkungsgrad.
Die Steuereinheit kann bei einem elektromotorischen Antrieb direkt mit den beiden Radantrieben verbunden sein und steuert dann beispielsweise den Betriebsstrom in Bezug auf die angelegte Spannung, die Stromstärke, die Flussrichtung und den Schaltzustand mittels eines Steuersignals.
Das Drehmoment ist direkt von den Parametern des Betriebsstroms abhängig, was eine einfache Steuerung ermöglicht. Ein elektromotorischer Radantrieb kann bei geeigneter Ausbildung durch ein einfaches Umschalten des Stromflusses in beiden Laufrichtungen betrieben werden.
Ein weiterer Vorteil besteht in der Möglichkeit einer Rekuperation, also die elektromotorische Antriebseinheit so auszubilden, dass in einem Umkehrbetrieb eine Energierückgewinnung bei einem Bremsvorgang erfolgen kann. Zudem kann so das Bremssystem teilweise oder vollständig mit der Antriebseinheit realisiert werden. Im Gegensatz zu Reibungsbremsen kann damit zugleich eine praktisch verschleißfrei arbeitende Bremsvorrichtung bereitgestellt werden, welche zudem keine Feinstaubemissionen durch einen Abrieb verursacht.

Die Antriebseinheit ist vorzugsweise durch die Verwendung von je einem Nabenmotor für den ersten und den zweiten Radantrieb realisiert.

In einer weiterführenden Weiterbildung weist die Lenkvorrichtung ein drittes und viertes Laufrad und einen dritten und einen vierten Radantrieb auf. Dabei ist das dritte und vierte Laufrad an dem Fahrgestell angeordnet. Der dritte Radantrieb ist dem dritten Laufrad und der vierte Radantrieb dem vierten Lauftrad zugeordnet. Der dritte und der vierte Radantriebe sind wie auch der erste und zweite Radantrieb ausgebildet, das jeweils zugeordnete Laufrad separat mit einem Drehmoment zu beaufschlagen. Hierzu ist gemäß dieser Weiterbildung die Steuerungseinheit mit allen Radantrieben, also nicht nur mit dem ersten und zweiten Radantrieb sondern ferner auch mit dem dritten und vierten Radantrieb verbunden ist. Die Steuerungseinheit ist in dieser Weiterbildung ausgebildet auch an den dritten und vierten Radantrieb Steuersignale zu übertragen.

In der Verbindung der vorbeschrieben Weiterbildung mit einer elektromotorischen Ausbildung der Antriebseinheit kann besonders vorteilhaft ein allradgetriebenes Fahrzeug bereitgestellt werden. Zum einen können Elektromotoren, insbesondere Nabenmotoren, relativ kostengünstig bereitgestellt werden und benötigen lediglich einen geringen Bauraum. Zum zweiten verteilt sich so die Antriebs- und Bremsleistung auf eine höhere Anzahl von Radantrieben, wodurch die thermische Belastung gesenkt werden kann. Ferner können alle Radantriebe durch ein- und dieselbe Steuereinheit intelligent angesteuert werden. Hierdurch lassen sich Vorteile im Traktionsverhalten und in der Fahrdynamik ohne zusätzliche Baueinheiten erreichen. Zudem können Fahrbefehle als elektronische Signale an die Steuereinheit gegeben werden. Als Vorteil ist die erfindungsgemäße Lenkvorrichtung sowie ein allradgetriebenes Fahrzeug mit einer solchen Lenkvorrichtung für eine Bedienung über eine Eingabeeinheit wie einem Joystick in besonderer Weise geeignet. Darüber hinaus können die Fahrbefehle auch als Ergebnis einer komplexen Verarbeitung von Eingangsinformationen vorliegen, so dass die erfindungsgemäße Lenkvorrichtung sowie ein allradgetriebenes Fahrzeug mit einer solchen Lenkvorrichtung auch für ein autonomes Fahren besonders geeignet ist.

Die vorbeschiebene Weiterbildung sieht insbesondere bevorzugt vor, dass die Drehmomentbeaufschlagung des dritten und vierten Radantriebs so erfolgt, dass die Lenkung des Fahrzeugs unterstützt wird. Bei einer Kurvenfahrt rollen die Laufräder der Innenseite und der Außenseite auf Abrollinien mit unterschiedlichen Radien, so dass das Laufrad der Innenseite eine kürzere Bahn zurücklegt als das Laufrad der Außenseite. Damit geht einher, dass für eine schlupffreie Fahrt das Laufrad der Innenseite eine geringere Drehgeschwindigkeit im Verhältnis zu der Drehgeschwindigkeit des Laufrads der Außenseite aufweist. Die Steuereinheit errechnet und überträgt solche Steuersignale an die Laufräder, die an dem dritten und vierten Laufrad jeweils ein solches Verhältnis der Drehgeschwindigkeiten aktiv einstellen, wie es dem Kurvenradius einer solchen Kurvenfahrt entspricht, die das Fahrzeug infolge der Verdrehung des Drehgestells aufgrund der unterschiedlichen Drehgeschwindigkeiten des ersten und zweiten Laufrads vollzieht. Damit wird eine Fahrrichtungsänderung sowohl durch die Verdrehung des Drehgestells, als auch durch die unterschiedlichen Drehgeschwindigkeiten des dritten und vierten Laufrads bewirkt. Als Vorteil wird eine besonderes zuverlässiges Lenkverhalten mit gleichzeitigem Traktionsvorteilen erreicht, was insbesondere auf problematischen Fahrbahnen vorteilhaft ist.

Die Antriebseinheit ist gemäß einer vorteilhaften Weiterbildung dazu ausgebildet die Laufräder in zueinander entgegengesetzter Richtung anzutreiben. Die Antriebseinheit weist hierzu entweder zwei Elektromotoren, welche unabhängig voneinander in entgegengesetzen Richtungen betrieben werden können und die Radantriebe ausbilden, oder sie weist mindestens ein zusätzliches Getriebe auf. Ein solches Getriebe erlaubt durch ein Schalten einer Anordnung von beispielsweise Zahnrädern die Umkehr der Laufrichtung.

Der Vorteil liegt hier in der Möglichkeit, Lenkbewegungen auf kleinstem Raum auszuführen.

Gemäß einer vorteilhaften Weiterbildung ist die Antriebseinheit dazu ausgebildet, das Fahrgestell während eines Fahrbetriebes anzutreiben. Die Antriebseinheit ist so ausgebildet, dass sie eine ausreichende Leistung aufbringen kann, um das Fahrgestell in eine gerichtete Bewegung zu versetzen. So ist eine Vorwärts- und Rückwärtsbewegung des Fahrgestells mittels der durch die Antriebseinheit aufgebrachen Kraft möglich. Die Lenkung erfolgt während des Fahrbetriebes unverändert in der oben beschriebenen Betriebsweise.
Durch die vorteilhafte Verbindung von Lenkung und Antrieb kann Material und Gewicht eingespart werden. Die Steuerung sowohl der Lenkbetriebszustände als auch der Fahrbetriebszustände erfolgt in dieser Ausbildung vorteilhaft über die erfindungsgemäß ohnehin vorhandene Steuerungseinheit.

Nach einer anderen Weiterbildung weist die Lenkvorrichtung einen Positionssensor auf, der ausgebildet ist, eine Winkelstellung des Drehgestells gegenüber dem Fahrgestell zu erfassen. Der Positionssensor ist mit der Steuerungseinheit datenverbunden und ferner so ausgebildet, die Informationen über die erfasste Winkelstellung, nachfolgend als Winkelstellungsdaten bezeichnet, an die Steuerungseinheit zu übertragen.
Damit liegen in der Steuerungseinheit die Informationen vor, in welcher Winkelstellung sich das Drehgestell gegenüber dem Fahrgestell befindet. Somit ist der Steuerungseinheit bekannt, ob eine Geradeausfahrt oder eine Kurvenfahrt erfolgt. Ferner ist der Radius einer Kurvenfahrt bekannt. Die Steuerungseinheit kann damit anhand der in sich eingegebenen Fahrbefehle, beispielsweise eines Fahrers, errechnen, mit welchen Drehgeschwindigkeiten jedes der beiden Laufräder gedreht werden muss, um die dem Fahrbefehl entsprechende gewünschte Lenk- und Fahrbewegung des Fahrzeugs auszuführen.

Nach einer weiteren vorteilhaften Weiterbildung überschreitet ein Abstand der Laufräder, gemessen von dem Mittelpunkt von deren Aufstandsflächen auf einer Fahrbahn, nicht den Durchmesser der Laufräder.
Ein weiterer Vorteil der Erfindung ergibt sich aus der möglichen räumlichen Nähe der beiden Laufräder. Die beiden Laufräder sind somit wie Zwillingsräder angeordnet und können nach bestimmten Vorschriften als ein einziges Rad gelten. Besonders bevorzugt übersteigt der Abstand der Laufräder, gemessen von dem Mittelpunkt von deren Aufstandsflächen auf einer Fahrbahn, 460 mm nicht.

Beispielsweise ist es auf diese Weise möglich, ein Fahrzeug mit einer erfindungsgemäßen Lenkvorrichtung im Sinne von bestimmten Vorschriften als dreirädriges Fahrzeug auszubilden, indem an dem Fahrgestell zwei weitere passive oder zusätzlich aktiv angetriebene Laufräder angeordnet sind. Hieraus ergeben sich wirtschaftliche Vorteile, da dreirädrige Fahrzeuge anderen Bestimmungen als mindestens vierrädrige Kraftfahrzeuge unterliegen. Dies gilt insbesondere für Typengenehmigungsverfahren für die dreirädrigen Fahrzeuge insgesamt als auch für Bauteile und Baugruppen hierfür.

Gemäß dieser vorteilhaften Weiterbildung ist sogar möglich, ein im Rechtssinne dreirädriges Fahrzeug mit einem vierrädrigen Allradantrieb auszubilden.

Diese Kombination aus einem vierrädrigen Allradantrieb mit einem dreirädigen Fahrzeug im vorbeschriebenen Sinne ermöglicht besondere Vorteile, weil die Laufräder nicht lediglich in zwei Spuren, sondern in drei Spuren in einem Fahrbahnkontakt stehen. Zu einen wirkt dies durch die Verteilung der Lasten vorteilhaft einer Spurrinnenbildung auf einer Fahrbahn entgegen. Zum anderen ergeben sich besondere Vorteile in Bezug auf das Traktionsverhalten und die Fahrdynamik.

In einer weiteren vorteilhaften Weiterbildung ist dem Drehgestelllager ein Dämpfungselement zugeordnet. Das Dämpfungselement ist ausgebildet, eine Dämpfung einer Verdrehbewegung des Drehgestells um die Vertikalachse zu bewirken.

Der Vorteil dieser Weiterbildung besteht in einer Erhöhung der Lenkstabilität und der Fahrstabilität. Insbesondere bei Fahrbahnunebenheiten, die nicht gleichmäßig auf beide Laufräder wirken, wird mittels des Dämpfungselements verhindert, dass sich das Drehgestell plötzlich um die Vertikalachse verdreht. Darüber hinaus wirkt das Dämpfungselement einem evenuellen Flattern des Drehgestells entgegen.

Das Dämpfungselement kann passiv ausgebildet sein und setzt hohen Winkelgeschwindigkeiten einer Verdrehbewegung des Drehgestells in dem Drehgestelllager einen hohen Widerstand entgegen. Ferner kann das Dämpfungselement auch aktiv ausgebildet sein, indem beispielsweise anhand von Winkelstellungsdaten, die ein Positionssensor aufgenommen hat, von der Steuerungseinheit plötzliche Winkelstellungsänderungen erfasst werden, die nicht den Winkelstellungen entsprechen, die zu den Steuerbefehlen der Steuerungseinheit an die Radantriebe kompatibel sind. Hierdurch wird mittels der Steuerungseinheit ein Befehl ausgegeben und durch den Befehl ein Dämpfungselement aktiviert, welches einer weiteren plötzlichen Winkelstellungsänderung entgegenwirkt.

Die Erfindung wird als Ausführungsbeispiel anhand von
- Fig. 1: Funktionsdarstellung Lenkvorrichtung in einer Ansicht von unten
- Fig. 2: Lenkvorrichtung in Seitenansicht
- Fig. 3: Funktionsdarstellung Lenkvorrichtung mit Allradantrieb in einer Ansicht von unten
näher erläutert.

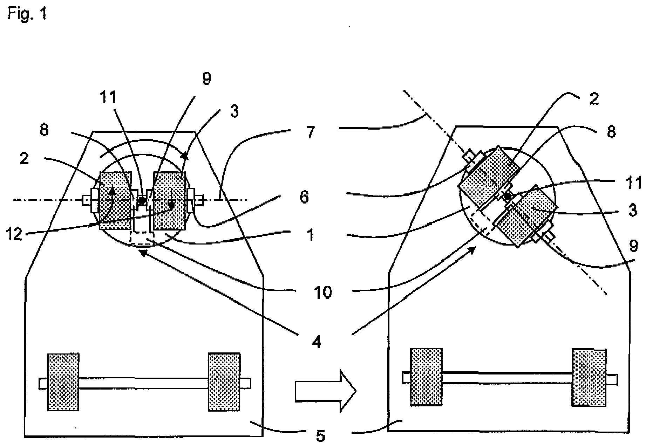

Figur 1 zeigt eine Funktionsdarstellung eines Ausführungsbeispiels in einer Ansicht der Unterseite der Lenkvorrichtung. Es wird ein Lenkvorgang der Lenkvorrichtung gezeigt. Die Ausgangsposition vor dem Lenkvorgang ist links und die Endposition nach dem Lenkvorgang ist rechts dargestellt.
Das Drehgestell 1 ist hier mit dem Fahrgestell 5 und der Radaufnahme 6 verbunden. Das Fahrgestell selbst ist nicht Bestandteil der erfindungsgemäßen Vorrichtung. In diesem Ausführungsbeispiel ist das Drehgestell als Radgabel an einer Platte ausgeführt. Das untere Ende der Radgabel ist mit der Radaufnahme 6 verbunden und die Platte ist mit dem Fahrgestell 5 verbunden. Die Verbindung zwischen der zylindrischen Platte des Drehgestells 1 und der hohlzylindrischen Öffnung des Fahrgestells 5 ist beweglich und ermöglicht eine Rotation des Drehgestells 1 um die Vertikalachse 11.
Das erste 2 und zweite Laufrad 3 sind auf einer gemeinsamen Horizontalachse 7 unabhängig voneinander gelagert und in der Radaufnahme 6 aufgenommen.
Die Antriebseinheit 4 besteht aus dem ersten 8 und dem zweiten Radantrieb 9 sowie der Steuerungseinheit 10.
Der erste Radantrieb 8 ist dem ersten Laufrad 2 und der zweite Radantrieb 9 ist dem zweiten Laufrad 3 zugeordnet. So können beide Laufräder 2, 3 unabhängig voneinander mit jeweils einem Drehmoment 12 beaufschlagt werden. Die Pfeile zeigen die Wirkrichtung des Drehmoments 12 in der Ausgangsposition (links) an. Durch die Drehmomente wird eine Lenkbewegung erzeugt indem das Drehgestell um die Vertikalachse 11 in die Endposition rotiert (rechts).
Die Steuerungseinheit 10 ist mit den beiden Radantrieben 8, 9 verbunden und regelt die Motorsteuerung durch ein übertragenes Steuersignal. In dieser Darstellung erzeugt die Steuerungseinheit 10 Steuersignale für zwei entgegengesetzte Drehmomente 12.

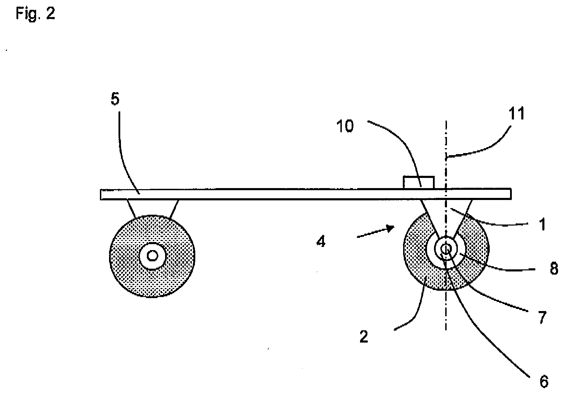

In Figur 2 ist eine Seitenansicht der Lenkvorrichtung dargestellt. Durch die Seitenansicht ist das Drehgestell 1 und die Vertikalachse 11 besser einsehbar. Die Ausgestaltung der Verbindung mit dem Fahrgestell 5 und mit der Radaufnahme 6 ist detaillierter dargestellt. Das Drehgestell ist hier in der einfachsten Form einer keilförmigen Radgabel gezeigt und verbindet das Fahrgestell 5 mit der Radaufnahme 6.
In der Radaufnahme 6 ist die gemeinsame Horizontalachse 7 der beiden Laufräder 2 eingefasst.
Die Antriebseinheit 4 besteht auch hier aus der Steuereinheit 10 und den Rad antrieben 8. Die Steuereinheit ist mit dem Radantrieb 8 verbunden.

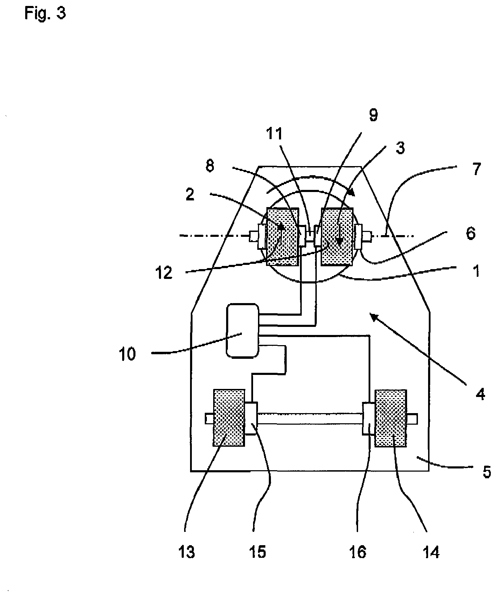

Figur 3 zeigt ein Ausführungbeispiel der Lenkvorrichtung in der Ausbildung eines allradgetriebenen Fahrzeugs. Der Grundaufbau entspricht den Ausführungsbeispiel gemäß Figur 1. In dem Ausführungsbeispiel ist die Steuereinheit 10 jedoch nicht an dem Drehgestell 1, sondern an dem Fahrgestell 5 angeordnet. Das Ausführungsbeispiel in Figur 5 weist zusätzlich ein drittes Laufrad 13 mit einem dritten Radantrieb 15 sowie ein viertes Laufrad 14 mit einem vierten Radantrieb 16 auf. Alle Radantriebe 8, 9, 15, 16 sind als Nabenmotoren ausgebildet und werden durch die Steuereinheit 10 angesteuert. Die Steuereinheit 10 ist hierfür mit Verbindungen (ohne Bezugszeichen) mit den Radantrieben 8, 9, 15, 16 verbunden. Die Steuereinheit errechnet für jeden Radantrieb 8, 9, 15, 16 den jeweils optimalen Steuerbefehl.

### Verwendete Bezugszeichen

- 1: Drehgestell
- 2: erstes Laufrad
- 3: zweites Laufrad
- 4: Antriebseinheit
- 5: Fahrgestell
- 6: Radaufnahme
- 7: Horizontalachse
- 8: erster Radantrieb
- 9: zweiter Radantrieb
- 10: Steuereinheit
- 11: Vertikalachse
- 12: Drehmoment
- 13: drittes Laufrad
- 14: viertes Laufrad
- 15: dritter Radantrieb
- 16: vierter Radantrieb

## Patentansprüche

1. Lenkvorrichtung,
aufweisend ein Drehgestell (1), ein erstes (2) und ein zweites Laufrad (3) sowie eine Antriebseinheit (4)
wobei das Drehgestell (1) gegenüber einem Fahrgestell (5) um eine Vertikalachse (11) in einem Drehgestelllager drehbar gelagert ist,
wobei das erste (2) und das zweite Laufrad (3) mittels einer Radaufnahme (6) rotierbar um eine gemeinsame Horizontalachse (7) an dem Drehgestell aufgenommen sind,
wobei die Antriebseinheit (4) einen ersten Radantrieb (8), einen zweiten Radantrieb (9) und eine Steuereinheit (10) aufweist,
wobei der erste Radantrieb (8) dem ersten Laufrad (2) zugeordnet ist, wobei der zweite Radantrieb (9) dem zweiten Laufrad (3) zugeordnet ist, und wobei jeder der beiden Radantriebe (8, 9) ausgebildet ist, das jeweils zugeordnete Laufrad (2, 3) separat mit einem Drehmoment (12) zu beaufschlagen,
wobei die Steuerungseinheit (10) mit den Radantrieben (8, 9) verbunden ist, wobei die Steuerungseinheit (10) ausgebildet ist, Steuersignale an die Radantriebe (8, 9) zu übertragen,
und wobei das Drehgestell (1) ausgebildet ist, sich mittels einer unterschiedlichen Drehgeschwindigkeit der Laufräder (2, 3) gegenüber dem Fahrgestell (5) um die Vertikalachse (11) zu verdrehen.

2. Lenkvorrichtung nach Anspruch 1,
**dadurch gekennzeichnet,**
**dass** die Antriebseinheit (4) elektromotorisch ausgebildet ist.

3. Lenkvorrichtung nach Anspruch 1 oder 2,
**dadurch gekennzeichnet,**
**dass** die Lenkvorrichtung ein drittes (13) und viertes Laufrad (14) und einen dritten (15) und einen vierten Radantrieb (16) aufweist, wobei das dritte (13) und viertes Laufrad (14) an dem Fahrgestell (5) angeordnet sind, wobei der dritte Radantrieb (15) dem dritten Laufrad (13) und der vierte Radantrieb (16) dem vierten Lauftrad (14) zugeordnet ist und und wobei der dritte (15) und der vierte Radantriebe (16) ausgebildet sind, das jeweils zugeordnete Laufrad (13, 14) separat mit einem Drehmoment (12) zu beaufschlagen, wobei die Steuerungseinheit (10) ferner mit dem dritten (16) und vierten Radantrieb (16) verbunden ist, wobei die Steuerungseinheit (10) ausgebildet ist, Steuersignale ferner an den dritten (16) und vierten Radantrieb (16) zu übertragen.

4. Lenkvorrichtung nach einem der vorhergehenden Ansprüche,
**dadurch gekennzeichnet,**
**dass** die Antriebseinheit (4) ausgebildet ist, die Laufräder (2, 3) in zueinander entgegengesetzter Richtung anzutreiben.

5. Lenkvorrichtung nach einem der Ansprüche 1, 2, 4,
**dadurch gekennzeichnet,**
**dass** die Antriebseinheit (4) ausgebildet ist, das gesamte Fahrgestell (5) während eines Fahrbetriebes anzutreiben.

6. Lenkvorrichtung nach einem der vorhergehenden Ansprüche,
**dadurch gekennzeichnet,**
**dass** die Lenkvorrichtung einen Positionssensor aufweist der ausgebildet ist, eine Winkelstellung des Drehgestells (1) gegenüber dem Fahrgestell (5) zu erfassen und Winkelstellungsdaten an die Steuerungseinheit (10) zu übertragen, wobei der Positionssensor mit der Steuerungseinheit datenverbunden ist.

7. Lenkvorrichtung nach einem der vorhergehenden Ansprüche,
**dadurch gekennzeichnet,**
**dass** ein Abstand der Laufräder (2, 3), gemessen von dem Mittelpunkt von deren Aufstandsflächen, den Durchmesser der Laufräder (2; 3) nicht überschreitet.

8. Lenkvorrichtung nach einem der vorhergehenden Ansprüche,
**dadurch gekennzeichnet**,
dem Drehgestelllager ein Dämpfungselement zugeordnet ist.
